# NOUVEAU FASCICULE DE BREVET EUROPEEN

(11) **EP 0 704 952 B2**
(45) Date de publication et mention de la décision concernant l'opposition: **14.04.2004**
(45) Mention de la délivrance du brevet: 08.09.1999
(21) Numéro de dépôt: 95402164.8
(22) Date de dépôt: 27.09.1995
(51) Int. Cl.: H02H 3/00, G05B 19/418

(54) **Circuit d'autosurveillance, notamment d'appareillage électrique et en particulier de disjoncteur haute tension à SF6**
Selbstüberwachungssystem, insbesondere für elektrische Vorrichtung, vorzugsweise für einen Hochspannungs-SF6-Leistungsschalter
Self-monitoring circuit, especially for electrical apparatus and in particular for an SF6 high-voltage circuit breaker

(30) Priorité: 29.09.1994 FR 9411638
(43) Date de publication de la demande: 03.04.1996
(73) Titulaire: Alstom T & D SA, 75116 Paris (FR)
(72) Inventeur: Ebersohl, Gerard, F-69350 La Mulatiere (FR); Chetay, Olfa, F-69200 Venissieux (FR)
(74) Mandataire: Poulin, Gérard

(56) Documents cités:
- WO-A-89/12345
- DD-A- 274 764
- US-A- 5 224 054
- ETZ, JUNE 1988, WEST GERMANY, vol. 109, no. 12, 1988 ISSN 0170-1711, pages 546-549, STEIG K -M ET AL 'Nahtstellensystem für Software zur Netzbetriebsführung'
- Cigré 1994 Session 28.08-28.09., 23/13-09 "Introduction of Digital Electronics in Switchgear Auxiliary Circuits and Improvement of Reliability" E. Thuries, G. Ebersohl, J.P. Duparz, O. Chetay, J.P. Moncorge
- Local Area Networks Architectures and Implementations" James Martin, Prentice Hall 1989
- atp 35(6), 1993 pages 335-360, Klehmer, Ettl, Goetz "Leistungsbewertung der Feldbus-Protokolle Profibus und FIP (Teil1)"
- atp 35(7), 1993 pages 403-407, Klehmer, Ettl, Goetz "Leistungsbewertung der Feldbus-Protokolle Profibus und FIP"

## Description

La présente invention est relative à un circuit d'autosurveillance d'appareillage, notamment d'appareillage électrique tel qu'un disjoncteur haute tension à SF6. Cet exemple d'application de l'invention est décrit dans la suite, mais il faut bien comprendre que l'invention peut s'appliquer à la surveillance de tout appareillage dans lequel des paramètres d'utilisation ou de fonctionnement peuvent être modifiés:

Le Demandeur a décrit, dans le document CIGRE, Session 1994, 28 août-3 septembre, sous le titre: "Introduction de l'électronique numérique dans les auxiliaires de l'appareilage et amélioration de la fiabilité", par E. Thuries, G. Ebersohl, J.-P. Dupraz, O. Chetay et J.-P. Moncorgé, un circuit d'autosurveillance et de contrôle d'un disjoncteur à haute tension dont les principes sont rappelés ci-après.

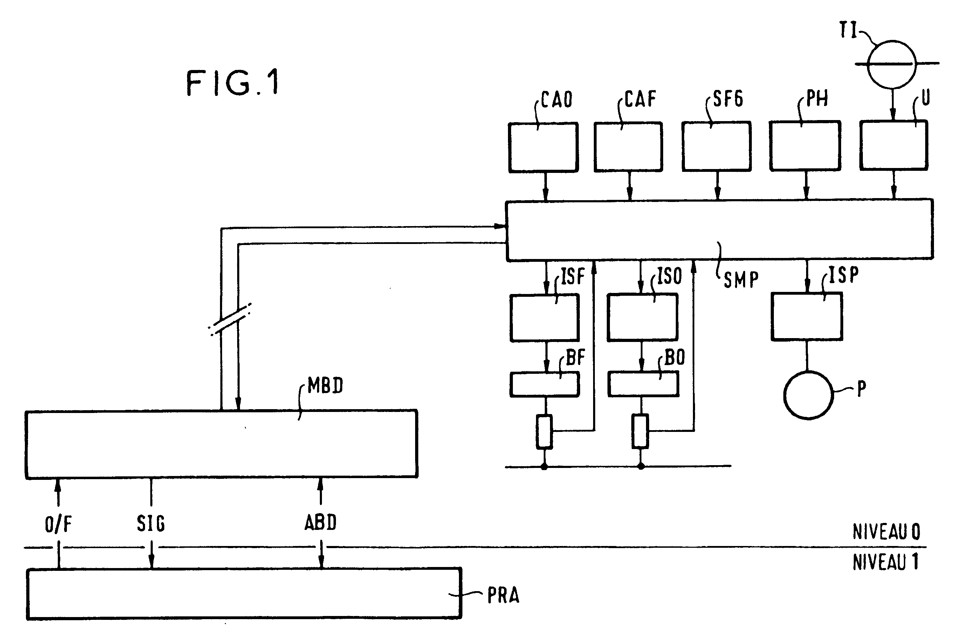

Le circuit comprend un niveau zéro représenté dans la figure 1. Il comprend des transducteurs pour la surveillance des paramètres de fonctionnement de l'appareil et en particulier:
- pour chaque pôle du disjoncteur, un transducteur CAO indiquant que le pôle est en position ouverte,
- pour chaque pôle du disjoncteur, un transducteur CAF indiquant que le pôle est en position fermée,
- pour chaque pôle, un transducteur SF6 fournissant la valeur de la pression du gaz d'isolement SF6 dans le pôle,
- un transducteur PH indiquant la pression d'huile dans la commande du disjoncteur
- pour chaque pôle, un transducteur U élaborant, à partir de la mesure du courant dans le pôle par un transformateur d'intensité Tl, une indication permettant l'évaluation de l'usure du pôle.

Les données de tous ces transducteurs sont adressées à un système multiprocesseur SMP, constituant une base de données réparties locale; le système SMP reçoit par ailleurs les ordres de fermeture et d'ouverture de la part des automates et des protections situées au niveau 1, et représentés dans la figure par le rectangle PRA.

Le système SMP converse avec l'étage PRA à travers un microcontrôleur MBD, dit microcontrôleur de bornier déporté, puisqu'il est localisé à distance du disjoncteur à surveiller. Le microcontrôleur MBD constitue une base de données qui est la réplique de la base de données du système SMP.

La liaison entre le microcontrôleur MBD et le système SMP se fait par des liaisons à fibres optiques, exemptes de perturbations électromagnétiques.

L'étage PRA peut être relié au microcontrôleur MBD par de différentes façons suivant que l'architecture du contrôle-commande du poste est conventionnelle ou numérique. Dans le premier cas, des liaisons parallèles, de préférence à fibres optiques, permettent la transmission des ordres d'ouverture et de fermeture O/F, les signalisations SIG et l'accès à la base de données.

Dans le deuxième cas, les mêmes échanges sont possibles, soit par une liaison optique série bi-directionnelle, soit, encore mieux, par accès direct à la mémoire double entrée contenant la base de données.

Le rôle du circuit SMP est le suivant:
- réaliser le pilotage correct des bobines de fermeture (BF) et d'ouverture (BO), sans aucun contact conventionnel dans la chaîne, à l'aide des interrupteurs statiques (ISF et ISO respectivement),
- élaborer des informations de position du disjoncteur avec un très haut degré de sécurité, grâce à un algorithme qui exploite notamment les redondances entres les transducteurs CAO et CAF, ainsi que les informations de discordance éventuelle,
- assurer une réouverture automatique des trois pôles en cas de discordance à la fermeture,
- assurer pour chacune des manoeuvres le chronométrage des deux durées caractéristiques, à savoir la durée entre la réception de l'ordre et le départ de la position initiale et la durée entre le départ de la position initiale et l'arrivée dans la position finale,
- assurer le pilotage de regonflage de la commande hydraulique, au moyen d'une pompe P et également par des circuits dénués de tout contact conventionnel, grâce notamment à un interrupteur statique ISP,
- élaborer signalisations, alarmes et verrouillages pour toute défaillance constatée lors des autotests générés par le circuit SMP, tant pour les transducteurs que pour les circuits de la commande hydraulique.

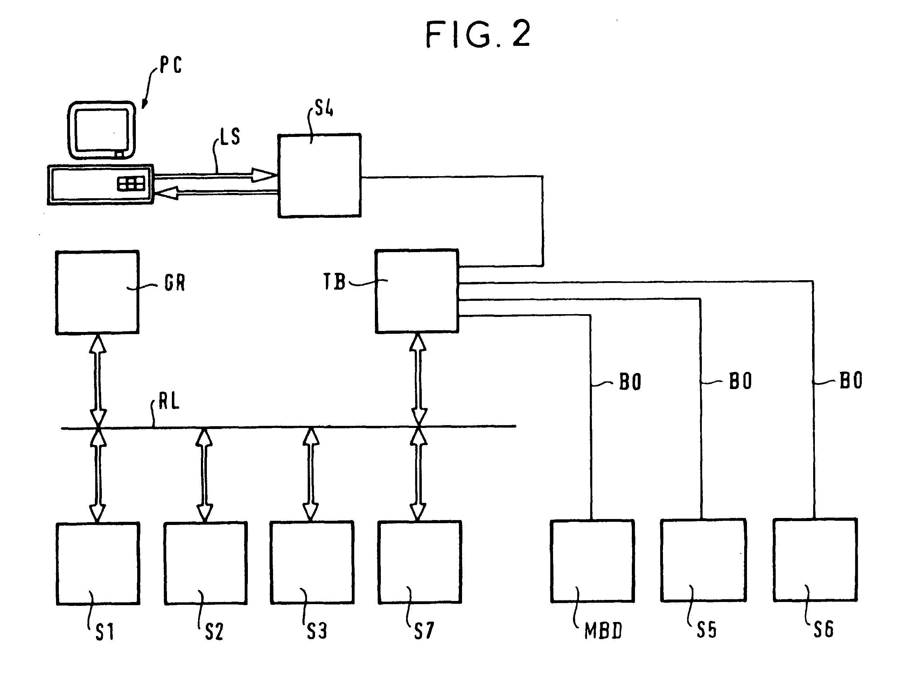

La figure 2 est un schéma bloc du système multiprocesseur SMP.

Le système est constitué de plusieurs microcontrôleurs constituant chacun autant de bases de données et qui assurent, en plus de leurs logiciels applicatifs particuliers, le logiciel de communication avec un réseau local RL, permettant d'assurer la gestion de la base de données réparties, rafraîchies périodiquement et garantissant notamment le dépôt simultané d'une même donnée dans chacunes de bases de données ditribuées. Un tel réseau local a été décrit dans la demande de brevet française 92 06 921 publiée sous le numéro FR-A-2 692 057.

Trois microcontrôleurs S1, S2, S3, (stations n° 1, 2 et 3), associés aux transducteurs de positions CAO et CAF de chacune des phases A, B et C du disjoncteur, assurent:
- l'autotest périodique des transducteurs de positions, la détermination de la position du pôle à l'état de veille et lors des manoeuvres,
- la commande adéquate des bobines BF et BO par l'intermédiaire des interrupteurs statiques ISF et ISO à partir des ordres acquis dans le microcontrôleur de bornier déporté MBD,
- l'autosurveillance permanente des circuits de commande, incluant les interrupteurs statiques ISF et ISO,
- le chronométrage des durées de fonctionnement des pôles lors des manoeuvres,
- le dépôt de toutes les informations précédentes dans la base de données réparties.

Le microcontrôleur MBD (station n° 0, interface) a les principales fonctions suivantes:
- acquisition, à partir du niveau 1, des ordres d'ouverture et de fermeture et de dépôt de ces informations dans la base de données, et par conséquent vers les stations,
- détermination de la position du disjoncteur à partir des informations produites par les microcontrôleurs associés aux phases (S1, S2 et S3),
- automatisme de discordance de position des pôles,
- élaboration et signalisation des alarmes lorsque des défaillances sont constatées, tant au niveau des autotests que sur positions anormales des pôles
- élaboration d'une alarme signalant une défaillance de l'une des stations ou du réseau local.

Un microcontrôleur S7 (station N°7) est affecté à la surveillance mécanique et exploite les données temporelles élaborées par les microcontrôleurs S1 à S3. Ces données sont accessibles dans sa base de données et permettent de surveiller:
- la durée maximum d'opération d'ouverture ou de fermeture de chaque pôle,
- les vitesses moyennes des contacts primaires,
- les éventuelles désynchronisation des pôles,
- le comptage des opérations de chaque pôle.

Les anomalies fonctionnelles sont codifiées et stockées en vue d'une analyse a posteriori du comportement du disjoncteur.

Deux microcontrôleurs S5 et S6 (stations n°5 et n°6) surveillent respectivement, pour chaque pôle, l'usure électrique des contacts et la densité du gaz d'isolement SF6.

Pour cela, la station n°5 reçoit, dans sa base de données, les informations relatives aux ordres d'ouverture et de fermeture; cette station, en retour, fournit l'information "usure électrique".

La station n°6 enrichit la base de données répartie des données SF6 relatives à chaque pôle. Les stations S1 à S3 ont ainsi accès à l'information qui leur est propre et peuvent adopter la stratégie correspondante lorsqu'elles reçoivent un ordre.

Un microcontrôleur GR assure la gestion du réseau local RL en désignant, au sein de ses trames, quelles sont les stations consommatrices et/ou productrices de telle ou telle donnée, au rythme de la périodicité de rafraîchissement de chaque donnée de la base de données réparties.

Une carte spéciale TB, appelée translateur de bus, permet le passage d'un bus filaire à des bus optiques BO. Le bus filaire en cuivre, pour des raisons de compatibilité électromagnétique, est ainsi confiné rigoureusement dans le rack électronique, les liaisons optiques évitant l'introduction de perturbations extérieures.

Un microcontrôleur S4 (station n°4) assure la passerelle logicielle entre le réseau RL et une liaison série LS vers le microordinateur du niveau 1, qui est de préférence du type PC (personal computer) et qui sera désigné dans la suite par PC.

Cette liaison permet, à des fins de maintenance, de constituer une interface homme-machine pour acccéder, en lecture, aux informations contenues dans la base de données réparties.

Un but de l'invention est d'agencer cette station et sa programmation de manière à permettre de modifier, par le PC local ou à distance, des seuils de fonctionnement du système (alarmes SF6 par exemple).

L'invention a pour objet un circuit d'autosurveillance d'appareillage tel que défini dans la revendication 1.

Avantageusement, le terminal est configuré pour être puits de toutes les données de la base de données réparties et source de messages concernant des demandes de transaction.

Les demandes de transaction peuvent être des demandes de lecture d'un paramètre en mémoire dans une station donnée du système ou l'inscription d'une nouvelle valeur d'un paramètre à une adresse déterminée d'une mémoire d'une station donnée.

Une demande d'inscription d'un nouveau paramètre est constitué de deux mots émis par le terminal et comprenant chacun deux octets, le premier indiquant la nature de la transaction, le numéro de la station destinataire et le numéro de page et l'index de la mémoire où le nouveau paramètre doit être rangé, le second mot comportant la valeur du nouveau paramètre formaté sur 14 bits, deux bits étant utilisés pour la vérification de la transaction.

Une demande de lecture comprend un mot émis par le terminal formaté sur deux octets et indiquant la nature de la transaction, le numéro de la station destinataire et le numéro de page et l'index de la mémoire où le paramètre doit être recherché, la réponse de la station sollicitée étant constituée d'un mot de deux octets comportant la valeur du paramètre lu à l'adresse indiquée, ledit mot étant formaté sur 14 bits, deux bits étant utilisés pour la vérification de la transaction.

L'invention a également pour objet un appareillage électrique caractérisé en ce qu'il comprend un circuit d'auto-surveillance comme indiqué plus haut.

L'invention a également pour objet un disjoncteur à haute tension à SF6, caractérisé en ce qu'il comprend un circuit d'auto-surveillance selon l'une des revendications 1 à 5.

L'invention est maintenant expliquée en référence au dessin annexé dans lequel:
- la figure 1 est un schéma d'un circuit de contrôle et d'autosurveillance d'un disjoncteur, selon l'art connu,
- la figure 2 est un schéma bloc du système multiprocesseur faisant partie du circuit de la figure 1.

La station n°4, appelée aussi terminal, contient, comme toutes les autres stations du système microprocesseur, une base de données. Les données sont constituées de deux octets et sont rangées à des adresses (page et index dans la page) bien déterminées. Les données sont classées en deux types:
- les données périodiques rafraîchies cycliquement en permanence par les trames émises par le gestionnaire de réseau GR. Elles doivent donc être présentées continuellement par la station productrice.
- les données apériodiques correspondant généralement à des seuils de surveillance, et dont les modifications, et par conséquent les acquisitions, sont très exceptionnelles et réalisées depuis la station n°4. Ces données ne sont donc présentées à la station réceptrice qu'au moment de leur modification.

Les données de chacun de ces types occupent deux zones bien distinctes dans la base de données: une zone dite "0" pour les données apériodiques et une zone dite "1" pour les données périodiques.

Pour les besoins du problème, qui est de recevoir des autres stations ou de transmettre à d'autres stations des messages relatifs à des changement des valeurs de seuil de certaines données apériodiques, il est prévu dans la station 4, de réserver deux zones de mémoires en zone "0", appelées premières zones de mémoire dediees, ayant chacune une dimension de deux octets, référencées dans la suite par BAL1 et BAL2. Ces boites aux lettres occupent par exemple, dans la page 0 de la mémoire, pour BAL1 les index FCh et FDh (en numérotation hexadécimale) et, pour BAL2, les index FEh et FFh. Il est prévu également de réserver, dans la base de données de la station 4, en zone "0", i zones de mémoire ayant deux octets chacune, i étant le numéro des stations du système multiprocesseur, ces zones étant appelées secondes zones de mémoire dédiées, et référencées BAL3i et localisées par exemple de sorte que l'index du premier octet soit ECh+2i, le second octet étant à l'index EDh+2i.

On note que le gestionnaire de réseau GR désigne la station n°4 comme productrice (ou source) des données contenues dans les mémoires BAL1 et BAL2, les autres stations étant consommatrices (ou puits) de ces données. En outre, la station n°4 est puits pour toutes les données de la base de données réparties.

Pour les données des mémoires BAL3i, chacune de ces mémoires BAL est rattachée à la station i correspondante, de sorte qu'une station i est configurée comme source du contenu de sa mémoire BAL3i, mais par contre, seule la station n°4 en est puits et reçoit donc le contenu de toutes les mémoires BAL3i.

La mémoire BAL1 concerne une demande de transaction par le PC. Par transaction on désigne soit une demande de lecture d'un paramètre, soit une demande d'écriture d'une nouvelle valeur d'un paramètre.

On a représenté ci-dessous une mémoire BAL 1, comprenant deux octets D0 à D7 aux adresses FCh et FDh respectivement:

| BAL1 (demande de transaction) | | | | | | | | | | |
|---|---|---|---|---|---|---|---|---|---|---|
| | D7 | D6 | | D5 | D4 | D3 | | D2 | D1 | D0 |
| FCh | nature opération | | * | n° page mémoire | | | * | n° station sollicitéé | | |
| FDh | adresse (index paramètre dans la page) | | | | | | | | | |

Les deux bits D7 et D6 du premier octet sont affectés à la nature de l'opération selon le codage suivant:

| Nature de l'opération | D7 | D6 |
|---|---|---|
| néant (pas d'opération) | 0 | 0 |
| demande d'écriture de paramètre | 1 | 0 |
| demande de lecture de paramètre | 0 | 1 |

Ces deux bits "nature de l'opération" sont destinés au dialogue entre le processeur de communication de la station 4 et la station sollicitée. Le numéro de la station sollicitée est désignée par les bits D0 à D2 du premier octet et le numéro de la page de la mémoire de la station concernée par la transaction est désignée par les bits D3 à D5 du premier octet.

Le contenu du deuxième octet sert à désigner l'index dans la page de la mémoire de la station sollicitée.

Ainsi, si l'on veut écrire une information à l'index 43 de la page 3 de la mémoire de la station n°5, le mot "demande de transaction" sera ainsi libellé:

| | | | | | | | |
|---|---|---|---|---|---|---|---|
| 1 | 0 | 0 | 1 | 1 | 1 | 0 | 1 |
| 0 | 1 | 0 | 0 | 0 | 0 | 1 | 1 |

La mémoire BAL2 sert à inscrire le nouveau paramètre à inscrire, ci-après désigné "data du PC"; ce paramètre est formaté sur 14 bits, les octets marqués x dans le schéma ci-dessous, les bits D6 et D7 du deuxième octet étant réservés au protocole, comme on le verra plus loin.

| | D7 | D6 | * | D5 | D4 | D3 | * | D2 | D1 | D0 |
|---|---|---|---|---|---|---|---|---|---|---|
| BAL2 | x | x | | x | x | x | | x | x | x |
| (data du PC) | | | | x | x | x | | x | x | x |

Le dispositif fonctionne de la manière suivante:

### 1° Cas d'une demande de modification d'un paramètre

Si un utilisateur, lors d'une visite de maintenance par exemple, est autorisé à changer un paramètre, il commence par écrire le nouveau paramètre dans le mot data du PC (BAL2), puis met à jour le mot "demande de transaction" (BAL1) comme il a été expliqué plus haut.

Les mots BAL1 ET BAL2 étant en zone "0" sont des données apériodiques et comme telles sont envoyés aux stations par l'intermédiaire du réseau local et sous le contrôle du gestionnaire de réseau GR. Les stations détectent simultanément la demande d'écriture par les valeurs respectives "1" et "0" des bits D6 et D7 du premier octet du premier mot; une seule station se reconnaît par son adresse codées par les les bits D0 à D2 du premier octet du premier mot; cette station inscrit dans la page et à l'index prescrits le nouveau paramètre lu dans BAL2 et conjointement le remet dans sa BAL3i pour un contrôle par la station n°4. Les 14 bits du nouveau paramètre sont ainsi rangés dans BAL3i, ainsi que, pour les bits D6 et D7 du deuxième octet de BAL3i (appelés aussi "nature data"), les bits selon la table ci-après:

| Nature data | D7 | D6 |
|---|---|---|
| Donnée invalide | 0 | 0 |
| Nouveau paramètre bien reçu | 1 | 0 |
| Le paramètre demandé en lecture est valide | 0 | 1 |

Dans le cas présent d'une demande d'écriture, c'est bien entendu les bits D7 = 1 D6 = 0 qui seront inscrits dans BAL3i si le système a bien fonctionné.

Le message BAL3i ("réponse transaction station i) est reçu par la station n°4 qui remet alors les bits "nature opération" (D7 et D6 de l'index FCh) à "00", indiquant ainsi qu'il n'y a plus de transaction en cours, puis la station sollicitée remet "nature data" à "00"; de même, les stations non sollicitées garderont les bits "nature data" à "00", indiquant que les données "réponse transaction" sont invalides.

### 2° Cas d'une demande de lecture de paramètre

Quand l'utilisateur désire lire une donnée apériodique dans une page de la zone "1" contenant les paramètres, on indique en FDh dans BAL2 l'index du paramètre que l'on veut lire et on établit le mot "demande de transaction" (index FCh) dans BAL1 comme suit:
- les bits D2D1D0 indiquent le numéro de la station sollicitée (exemple :"110" pour la station 6),
- les bits D5D4D3 indiquent le numéro de page mémoire (exemple: "001" pour la page 1),
- les bits D7D6 indiquent la nature de l'opération: ici, c'est une demande de lecture , donc D1D0 sont positionnés à "01".

Le message transmis par le réseau est lu par toutes les stations; seule, la station sollicitée se reconnaît et fournit la réponse dans les mots "réponse transaction i" dont l'index du premier octet est égal à ECh+2i, comme indiqué ci-dessous où les y représentent le paramètre codé en 14 bits. Les bits D7 et D6 du deuxième octet sont codés en "01" pour indiquer à la station 4 que la donnée sur 14 bits qu'elle contient est valide.

| | | D7 | D6 | D5 | D4 | D3 | D2 | D1 | D0 |
|---|---|---|---|---|---|---|---|---|---|
| **BAL3** | ECh+2i | y | y | y | y | y | y | y | y |
| **rép. trans-action** | EDh+2i | 1 | 0 | y | y | y | y | y | y |

Quand la station sollicitée a répondu, la station 4, après avoir vérifié dans BAL3i la validité de la donnée reçue en réponse à sa demande, remet "nature opération" (D1 D0 de l'index FCh) à "00", indiquant ainsi qu'il n'y a plus de transaction en cours, puis la station sollicitée (n° 6 dans l'exemple choisi) remet "nature data" à "00"; de même les stations non sollicitées garderont les bits nature data" à "00" indiquant que les données "réponse transaction" sont invalides.

### 3° Extension de l'utilisation des zones de mémoire dédiées"

Le PC peut demander aussi des acquittements de défaut ou des téléactions en déposant sa demande dans BAL1. L'index en FDh sera exploité par les stations concernées.

On conçoit également que les données écrites, par des transactions successives via le PC, en local ou à distance, permettent le téléchargement en zone "1" de données correspondant à du code binaire et par conséquent exécutables par le microcontrôleur applicatif de la station. Celui-ci, par une commande appropriée, toujours via le PC, peut ainsi exécuter de courts programmes de test ou de diagnostic.

L'invention n'est pas limitée à la commande d'un disjoncteur. Elle s'applique mutatis mutandis à tous les appareillages, électriques ou non, comprenant des capteurs ou transducteurs de mesure fournissant des données à un système multiprocesseur comprenant des stations reliées en réseau sous la commande d'un gestionnaire de réseau et constituant une base de données réparties rafraîchies avec des périodicités données, le réseau pouvant recevoir en outre des instructions ou consignes d'un niveau supérieur.

L'invention permet l'autosurveillance des appareillages, notamment électriques, et en particulier des disjoncteurs, ce qui permet par exemple d'exécuter une maintenance prédictive et de fonctionner en mode dégradé entre deux maintenances effectives.

## Revendications

1. Circuit d'autosurveillance d'appareillage comprenant une pluralité de transducteurs (CAO,CAF,SF6,PH,T1) pour la mesure de paramètres de fonctionnement dudit appareillage, lesdits transducteurs de mesure fournissant des données à un système multiprocesseur (SMP) comprenant des stations (S1,S2,S3,S5,S6) reliées par un réseau local (RL) sous la commande d'un gestionnaire de réseau (GR) et constituant une base de données réparties rafraîchies avec des périodicités données, le système multiprocesseur (SMP) pouvant recevoir des instructions d'un niveau supérieur et lui fournir des réponses, ledit niveau supérieur (PS,S4) comprenant un ordinateur (PC) relié par une liaison série (LS) à un microcontrôleur (S4) appelé terminal et relié au réseau (RL) pour former une passerelle, **caractérisé en ce que** ledit terminal comporte en mémoire, d'une part, une première zone de mémoire (zone 1) pour stocker des données périodiques rafraîchies de façon cyclique par des trames émises par le gestionnaire de réseau (GR) et, d'autre part, une seconde zone de mémoire (zone 0), distincte de la première zone de mémoire, pour stocker des données apériodiques que ledit terminal reçoit desdites stations ou que ledit terminal transmet à toutes lesdites stations par l'intermédiaire des trames émises par le gestionnaire de réseau (GR),
**en ce que** pour transmettre des données apériodiques à toutes les stations, ledit terminal stocke des premiers messages réseau, correspondant à des demandes de transaction, dans des premières zones dédiées (BAL1,BAL2) de la seconde zone de mémoire, ces premiers messages étant reçus par toutes les stations dans des zones de mémoire déterminées de chaque station,
et **en ce que** les données apériodiques que ledit terminal reçoit desdites stations sous la forme de seconds messages réseau, correspondant à des réponses des stations interrogées, sont stockés dans des secondes zones dédiées (BAL3) de la seconde zone de mémoire, lesdites secondes zones dédiées étant associées respectivement aux dites stations correspondantes de telle manière que des données reçues par le terminal d'une station sont stockées dans une seconde zone dédiée (BAL3i) associée à ladite station (station i).

2. Circuit selon la revendication 1, **caractérisé en ce que** le terminal est configuré pour être puits de toutes les données de la base de données réparties et source de messages concernant les demandes de transaction.

3. Circuit selon la revendication 2, **caractérisé en ce que** les demandes de transactions peuvent être des demandes de lecture d'un paramètre en mémoire dans une station donnée du système ou l'inscription d'une nouvelle valeur d'un paramètre à une adresse déterminée d'une mémoire d'une station donnée.

4. Circuit selon la revendication 3, **caractérisé en ce qu'**une demande d'inscription d'un nouveau paramètre est constituée de deux mots émis par le terminal et comprenant chacun deux octets, le premier (BAL1) indiquant la nature de la transaction, le numéro de la station destinataire et le numéro de page et l'index de la mémoire où le nouveau paramètre doit être rangé, le second mot (BAL2) comportant la valeur du nouveau paramètre formaté sur 14 bits, deux bits étant utilisés pour la vérification de la transaction.

5. Circuit selon la revendication 3, **caractérisé en ce qu'**une demande de lecture comprend un mot émis par le terminal (BAL1) formaté sur deux octets et indiquant la nature de la transaction, le numéro de la station destinataire et le numéro de page et l'index de la mémoire où le paramètre doit être recherché, la réponse de la station sollicitée étant constituée d'un mot de deux octets (BAL3i) comportant la valeur du paramètre lu à l'adresse indiquée, ledit mot étant formaté sur 14 bits, deux bits étant utilisés pour la vérification de la transaction.

6. Appareillage électrique, **caractérisé en ce qu'**il comprend un circuit d'auto-surveillance selon l'une des revendications 1 à 5.

7. Disjoncteur à haute tension à SF6, **caractérisé en ce qu'**il comprend un circuit d'auto-surveillance selon l'une des revendications 1 à 5.

## Patentansprüche

1. Selbstüberwachungssystem für eine Vorrichtung, mit einer Vielzahl von Transducern (CAO, CAF, SF6, PH, T1) zur Messung von Betriebsparametern der Vorrichtung, wobei die Messtransducer Daten an ein Multiprozessorsystem (SMP) liefern, das Stationen (S1, S2, S3, S5, S6) aufweist, die durch ein lokales Netz (RL) unter Steuerung von einem Netzverwalter (GR) verbunden sind und eine Basis von mit gegebenen Periodizitäten aufgefrischten, verteilten Daten bilden, wobei das Multiprozessorsystem (SMP) Anweisungen von einer höheren Ebene empfangen und ihr Antworten liefern kann, wobei die höhere Ebene (PC, S4) einen Rechner (PC) aufweist, der durch eine serielle Verbindung (LS) mit einem Mikrosteuergerät (S4) verbunden ist, das Terminal genannt wird und mit dem Netz (RL) verbunden ist, um eine Brücke zu bilden, **dadurch gekennzeichnet, dass** das Terminal als Speicher einerseits eine erste Speicherzone (Zone 1) zum Speichern periodischer Daten, die durch vom Netzverwalter (GR) ausgesendeten Rahmen zyklisch aufgefrischt werden, und andererseits eine zur ersten Speicherzone unterschiedliche zweite Speicherzone (Zone 0) zum Speichern aperiodischer Daten, die das Terminal von den Stationen empfängt oder die das Terminal an alle Stationen mittels der vom Netzverwalter (GR) ausgesendeten Rahmen überträgt, aufweist, dass zum Übertragen der aperiodischen Daten an alle Stationen das Terminal erste Netznachrichten, die Transaktionsanforderungen entsprechen, in ersten gewidmeten Zonen (BAL 1, BAL2) der zweiten Speicherzone speichert, wobei diese ersten Nachrichten von allen Stationen in den von jeder Station bestimmten Speicherzonen empfangen werden, und dass die aperiodischen Daten, die das Terminal von den Stationen in Form von zweiten Netznachrichten empfängt, die den Antworten der abgefragten Stationen entsprechen, in den zweiten gewidmeten Zonen (BAL3) der zweiten Speicherzone gespeichert sind, wobei die zweiten gewidmeten Zonen mit den entsprechenden Stationen derart verbunden sind, dass die vom Terminal einer Station empfangenen Daten in einer zweiten gewidmeten Zone (BAL3i), die mit der Station (Station i) verbunden ist, gespeichert sind.

2. System nach Anspruch 1, **dadurch gekennzeichnet, dass** das Terminal so konfiguriert ist, dass es eine Senke für alle Daten der Basis von verteilten Daten und eine Quelle für Nachrichten ist, die Transaktionsanforderungen entsprechen.

3. System nach Anspruch 2, **dadurch gekennzeichnet, dass** die Transaktionsanforderungen Anforderungen zum Lesen eines Parameters im Speicher einer gegebenen Station des Systems oder zum Eintragen eines neuen Wertes eines Parameters an einer vorbestimmten Adresse eines Speichers einer gegebenen Station sein können.

4. System nach Anspruch 3, **dadurch gekennzeichnet, dass** eine Anforderung zum Eintragen eines neuen Parameters aus zwei vom Terminal ausgesandten Wörtern besteht und jeweils zwei Byte umfasst, wobei das erste (BAL1) die Art der Transaktion, die Nummer der Empfängerstation und die Nummer der Seite und den Index des Speichers angibt, in dem der neue Parameter angeordnet werden soll, wobei das zweite Wort (BAL2) den Wert des neuen Parameters aufweist, der auf 14 Bit formatiert ist, wobei zwei Bit für die Überprüfung der Transaktion verwendet werden.

5. System nach Anspruch 3, **dadurch gekennzeichnet, dass** eine Leseanforderung ein vom Terminal ausgesandtes Wort (BAL1) umfasst, das auf zwei Byte formatiert ist und die Art der Transaktion, die Nummer der Empfängerstation und die Nummer der Seite und den Index des Speichers angibt, wo der Parameter gesucht werden muss, wobei die Antwort der beanspruchten Station aus einem Wort mit zwei Byte (BAL3i) besteht, das den Wert des an der angegebenen Adresse gelesenen Parameters aufweist, wobei das Wort auf 14 Bit formatiert ist, wobei zwei Bit für die Überprüfung der Transaktion verwendet werden.

6. Elektrische Vorrichtung, **dadurch gekennzeichnet, dass** sie ein Selbstüberwachungssystem nach einem der Ansprüche 1 bis 5 aufweist.

7. SF6-Hochspannungsleistungsschalter, **dadurch gekennzeichnet, dass** er ein Selbstüberwachungssystem nach einem der Ansprüche 1 bis 5 aufweist.

## Claims

1. Circuit for self-monitoring equipment including a plurality of transducers (CAO, CAF, SF₆, PH, T1) for measuring operating parameters of said equipment, said measuring transducers providing data to a multiprocessor system (SMP) comprising stations (S1, S2, S3, S5, S6) interconnected by a local network (RL) under the control of a network controller (GR) and constituting a distributed database that is refreshed periodically at given rates, the multiprocessor system (SMP) being capable of receiving instructions from a higher level and of delivering responses thereto, said higher level (PC, S4) including a computer (PC) connected by a serial link (LS) to a microcontroller (S4), known as a terminal and connected to the network (RL) to form a bridge, **characterized in that** said terminal has in stored form on the one hand a first memory zone (zone "1") for storing periodic data cyclically refreshed by frames emitted by the network controller (GR) and on the other hand a second memory zone (zone "0"), separate from the first memory zone, for storing aperiodic data which said terminal receives from said stations or which said terminal transmits to all said stations by means of frames emitted by the network controller (GR), **in that** for transmitting aperiodic data to all the stations, said terminal stores first network messages corresponding to transaction requests in first dedicated zones (BAL1, BAL2) of the second memory zone, said first messages being received by all the stations in given memory zones of each station and **in that** the aperiodic data received by said terminal from said stations in the form of second network messages and corresponding to interrogated station responses, are stored in second dedicated zones (BAL3) of the second memory zone, said second dedicated zones being respectively associated with said corresponding stations in such a way that data received by the terminal of one station are stored in a second dedicated zone (BAL3i) associated with said station (station i).

2. Circuit according to claim 1, **characterized in that** the terminal is configured to be a sink for all of the data in the distributed database and a source for messages concerning transaction requests.

3. Circuit according to claim 2, **characterized in that** transaction requests may be requests to read a parameter in the memory of a given station of the system or to write a new value for a parameter at a determined address in the memory of a given station.

4. Circuit according to claim 3, **characterized in that** a request to write a new parameter is made up of two words issued by the terminal and each comprising two bytes, the first word (BAL1) indicating the nature of the transaction, the number of the destination station, and the page number and the index in the memory where the new parameter is to be stored and the second word (BAL2) comprising the value of the new parameter formatted on 14 bits, with two bits being used for verifying the transaction.

5. Circuit according to claim 3, **characterized in that** a read request comprises a word issued by the terminal (BAL1) formatted on two bytes and indicating the nature of the transaction, the number of the destination station, and the page number and the index in the memory where the parameter is to be found, the response of the requested station being constituted by a two-byte word (BAL3i) containing the value of the parameter read at the specific address, said word being formatted on 14 bits, with two bits being used for verifying the transaction.

6. Electrical equipment, **characterized in that** it includes a self-monitoring circuit according to any one of claims 1 to 5.

7. High tension SF₆ circuit breaker, **characterized in that** it includes a self-monitoring circuit according to any one of claims 1 to 5.
